# EUROPEAN PATENT APPLICATION

(11) **EP 3 348 345 A1**
(43) Date of publication of application: **18.07.2018**
(21) Application number: 17020017.4
(22) Date of filing: 13.01.2017
(51) Int. Cl.: B23K 37/04

(54) **PROCESS FOR TRUSS WELDING TOOLING**

(71) Applicant: SYNEY Electric (Hangzhou) Co., Ltd., Hangzhou, Zhejiang Province (CN)
(72) Inventor: Liu, Tao, Hangzhou, Zhejiang province (CN); He, Bin, Hangzhou, Zhejiang province (CN); Feng, Tao, Hangzhou, Zhejiang province (CN); Zheng, Da, PingShui Town, ShaoXing county, Zhejiang province (CN); Shen, HuaQiang, AnChang Town, Shaoxing county, Zhejiang province (CN)
(74) Representative: Meyer, Thorsten

(57) **Abstract**

The present invention discloses a process for truss welding tooling, including: placing an upper chord and a lower chord on welding tooling, the upper chord and the lower chord passing through a positioning wall block to incline same at an angle of 45°; spot-welding the upper chord and the lower chord until full welding performed on the upper chord is completed; pushing a bottom plate into its place from bottom, and erecting halves of positioning wallboards at the same time; tack-welding large and small angle steel at the head; welding the bottom plate and bottom plate channel steel; hoisting and positioning the upper chord and the lower chord of a right single piece; tack-welding an upright rod; tack-welding a diagonal brace rod; hoisting an upper leveling segment of the truss into a gantry welding device and positioning same; hoisting a left single piece at a straight segment into the gantry welding device and positioning same; performing alignment and spot welding close to the side plate interface, and performing positioning using a caliper gauge for central v-door dimensions; welding the bottom plate and the channel steel at the straight segment; tack-welding an apron plate interface and a guide rail support plate interface; and tack-welding brace rods at an inflection point, so that each brace rod is full-welded from three inner sides at the inflection point after tack welding. The present invention has the advantages of simple structure and strong practicality.

## Description

### Technical Field

The present invention relates to truss welding tooling, in particular to a process for truss welding tooling.

### Background

In general, all truss welding tooling in an industry are formed by welding single pieces and then assembling same on the gantry. It is a problem in this industry that the planeness of the single pieces and the deflection of the assembled long-span truss cannot be controlled.

### Summary

The purpose of the present invention is to design a process for truss welding tooling to solve the above problem.

To achieve the above purpose, the technical solution adopted in the present invention is as follows: a process for truss welding tooling, including the following steps:
(1) placing an upper chord and a lower chord on welding tooling, the upper chord and the lower chord passing through a positioning wall block to incline same at an angle of 45°;
(2) pushing out altitude-direction positioning pins for positioning the upper chord and the lower chord by a cylinder on the welding tooling;
(3) manually handling positioning welding elements by welding personnel from a side passage in the welding tooling, and clamping the upper chord and the lower chord using a speed wrench;
(4) spot-welding the upper chord and the lower chord by the welding personnel while standing in the side passage in the welding tooling until full welding performed on the upper chord is completed;
(5) backing the altitude-direction positioning pin of the lower chord;
(6) pushing a bottom plate into its place from bottom, and erecting positioning wallboards at both sides at the same time;
(7) tack-welding large and small angle steel at the head;
(8) welding the bottom plate and bottom plate channel steel;
(9) mounting a special lifting sling above the welding tooling;
(10) loosening a clamping wrench on the welding tooling;
(11) backing the positioning pin of the upper chord;
(12) inclining the positioning wall block at an angle of 45°;
(13) placing the upper leveling segment and the lower leveling segment of the welded truss, and waiting for the next step;
(14) calculating information about trapezium length and the like, and moving a trolley to a position shown by a scaleplate and locking same;
(15) moving the scaleplate on the welding tooling based on the information in the step (14);
(16) moving a right single piece to a position shown by the scaleplate using the moving trolley and locking same;
(17) hoisting and positioning the upper chord and the lower chord of the right single piece;
(19) tack-welding an upright rod;
(20) tack-welding a diagonal brace rod;
(21) full-welding same from three sides;
(22) placing the truss at the straight segment in step (21), and waiting for the next step;
(23) hoisting the upper leveling segment of the truss into a gantry welding device and positioning same;
(24) hoisting the truss at the straight segment into the gantry welding device and positioning same;
(25) hoisting the right single piece at the straight segment into the gantry welding device and positioning same;
(26) hoisting a left single piece at the straight segment into the gantry welding device and positioning same; and performing alignment and spot welding close to the side plate interface, and positioning using a caliper gauge for central v-door dimensions;
(27) hoisting the lower leveling segment of the truss into the gantry welding device and positioning same, and performing interface alignment and spot welding;
(28) welding the bottom plate and the channel steel at the straight segment;
(29) tack-welding an apron plate interface and a guide rail support plate interface; and
(30) tack-welding brace rods at an inflection point, so that each brace rod is full-welded from three inner sides at the inflection point after tack welding.

The steps (2)-(13) can be repeatedly performed.

The steps (17)-(21) can be repeatedly performed.

The steps (17)-(21) can be used for welding left single pieces. Positioning is performed using a positioning pin in the step (19).

A transverse seam at one side is preserved and is not welded in the step (22).

The positioning mode in the step (25) is to perform front-back positioning by alignment and spot welding close to the upper side plate interface and perform lateral positioning close to the positioning surface of the tooling using a C-shaped clip.

The positioning mode in the step (26) is to perform front-back positioning by alignment and spot welding close to the upper side plate interface and perform positioning using a caliper gauge for central v-door dimensions.

The upper lifting sling and the lower lifting sling can be removed simultaneously while performing the step (27).

There are four brace rods in total in the step (30), including an upper brace rod, a lower brace rod, a left brace rod and a right brace rod.

By means of the process for truss welding tooling manufactured by the technical solution of the present invention, it is easy to guarantee the accuracy of relatively short upper and lower head trusses assembled by positioning and clamping the tooling, and since the truss at the sloping segment is in a rectangular or liner shape, compared with the traditional Z-shaped single piece, it is easier to guarantee the planeness of the single piece welded through the traditional process. Finally, upper and lower head assembles held in a clamping mode and the truss at the sloping segment are assembled in a butting mode, so that the truss accuracy is guaranteed by this tooling process.

### Description of the Drawings

Figure 1 is a schematic diagram of a flow of a process for truss welding tooling of the present invention;
Figure 2 is a front view of tack-welding tooling with upper and lower leveling segments in the flow of the process for truss welding tooling of the present invention;
Figure 3 is a left view of tack-welding tooling with upper and lower leveling segments in the flow of the process for truss welding tooling of the present invention;
Figure 4 is a front view of tooling with a single piece at a sloping segment in the flow of the process for truss welding tooling;
Figure 5 is a K-direction view of tooling with a single piece at a sloping segment in the flow of the process for truss welding tooling;
Figure 6 is a schematic diagram of gantry assembling and welding tooling in the flow of the process for truss welding tooling;
Figure 7 is an auxiliary view of a 35°-4.5M ladder as a rated calculation basis of working stations and working hours for welding single pieces in the flow of the process for truss welding tooling;
Figure 8 is an auxiliary view of a 30°-4.5M ladder as a rated calculation basis of working stations and working hours for welding single pieces in the flow of the process for truss welding tooling; and
Figure 9 is an auxiliary view of a rated calculation basis of working hours for welding the upper and lower leveling segments in the flow of the process for truss welding tooling.

### Detailed Description

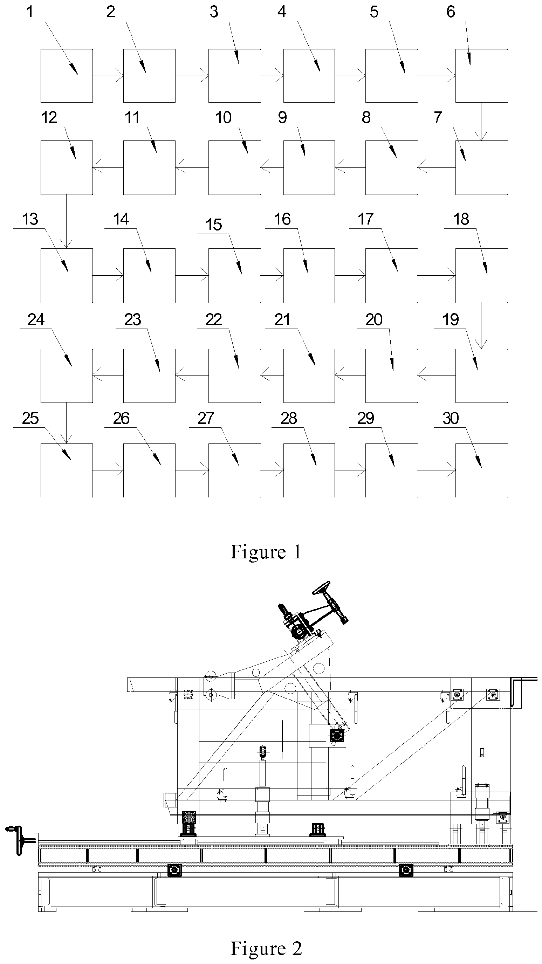

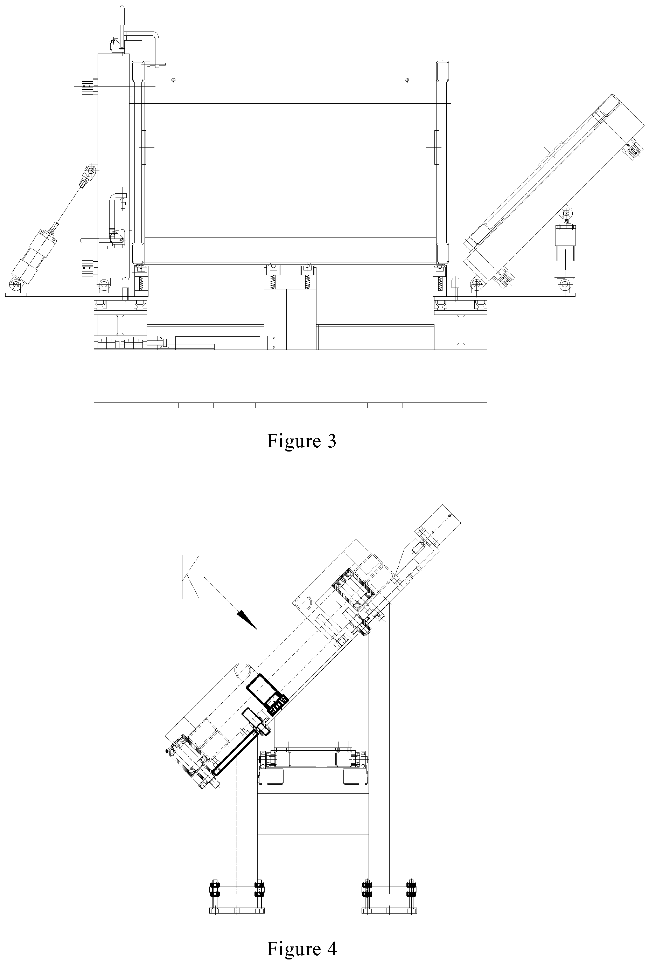

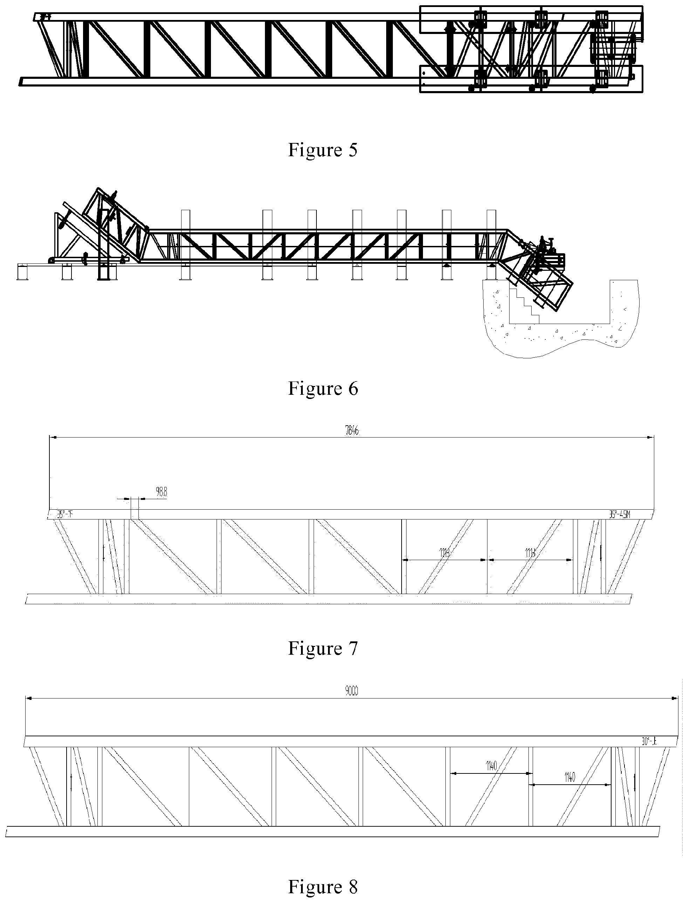

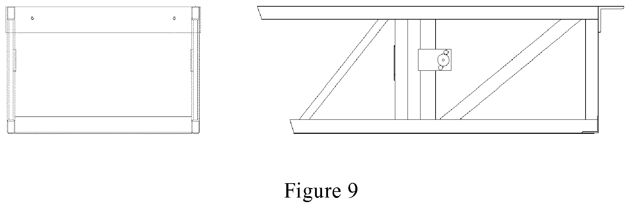

The present invention is further described in detail below in combination with the drawings. As shown in Figures 1-9, a process for truss welding tooling comprises the following steps: (1) placing an upper chord and a lower chord on welding tooling, the upper chord and the lower chord passing through a positioning wall block to incline same at an angle of 45°; (2) pushing out altitude-direction positioning pins for positioning the upper chord and the lower chord by a cylinder on the welding tooling; (3) manually handling positioning welding elements by welding personnel from a side passage in the welding tooling, and clamping the upper chord and the lower chord using a speed wrench; (4) spot-welding the upper chord and the lower chord by the welding personnel while standing in the side passage in the welding tooling until full welding performed on the upper chord is completed; (5) backing the altitude-direction positioning pin of the lower chord; (6) pushing a bottom plate into its place from bottom, and erecting positioning wallboards at both sides at the same time; (7) tack-welding large and small angle steel at the head; (8) welding the bottom plate and bottom plate channel steel; (9) mounting a special lifting sling above the welding tooling; (10) loosening a clamping wrench on the welding tooling; (11) backing the positioning pin of the upper chord; (12) inclining the positioning wall block at an angle of 45°; (13) placing the upper leveling segment and the lower leveling segment of the welded truss, and waiting for the next step; (14) calculating information about trapezium length and the like, and moving a trolley to a position shown by a scaleplate and locking same; (15) moving the scaleplate on the welding tooling based on the information in the step (14); (16) moving a right single piece to a position shown by the scaleplate using the moving trolley and locking same; (17) hoisting and positioning the upper chord and the lower chord of the right single piece; (19) tack-welding an upright rod; (20) tack-welding a diagonal brace rod; (21) full-welding same from three sides; (22) placing the truss at the straight segment in step (21), and waiting for the next step; (23) hoisting the upper leveling segment of the truss into a gantry welding device and positioning same; (24) hoisting the truss at the straight segment into the gantry welding device and positioning same; (25) hoisting the right single piece at the straight segment into the gantry welding device and positioning same; (26) hoisting a left single piece at the straight segment into the gantry welding device and positioning same; and performing alignment and spot welding close to the side plate interface, and positioning using a caliper gauge for central v-door dimensions; (27) hoisting the lower leveling segment of the truss into the gantry welding device and positioning same, and performing interface alignment and spot welding; (28) welding the bottom plate and the channel steel at the straight segment; (29) tack-welding an apron plate interface and a guide rail support plate interface; and (30) tack-welding brace rods at an inflection point, so that each brace rod is full-welded from three inner sides at the inflection point after tack welding; the steps (2)-(13) can be repeatedly performed; the steps (17)-(21) can be repeatedly performed; the steps (17)-(21) can be used for welding the left single pieces; positioning is performed using the positioning pin in the step (19); a transverse seam at one side is preserved and is not welded in the step (22); the positioning mode in the step (25) is to perform front-back positioning by alignment and spot welding close to the upper side plate interface and perform lateral positioning close to the positioning surface of the tooling using a C-shaped clip; the positioning mode in the step (26) is to perform front-back positioning by alignment and spot welding close to the upper side plate interface and perform positioning using a caliper gauge for central v-door dimensions; the upper lifting sling and the lower lifting sling can be removed simultaneously while performing the step (27); and there are four brace rods in total in the step (30), including an upper brace rod, a lower brace rod, a left brace rod and a right brace rod.

This embodiment is characterized by comprising the following steps: (1) placing an upper chord and a lower chord on welding tooling, the upper chord and the lower chord passing through a positioning wall block to incline same at an angle of 45°; (2) pushing out altitude-direction positioning pins for positioning the upper chord and the lower chord by a cylinder on the welding tooling; (3) manually handling positioning welding elements by welding personnel from a side passage in the welding tooling, and clamping the upper chord and the lower chord using a speed wrench; (4) spot-welding the upper chord and the lower chord by the welding personnel while standing in the side passage in the welding tooling until full welding performed on the upper chord is completed; (5) backing the altitude-direction positioning pin of the lower chord; (6) pushing a bottom plate into its place from bottom, and erecting positioning wallboards at both sides at the same time; (7) tack-welding large and small angle steel at the head; (8) welding the bottom plate and bottom plate channel steel; (9) mounting a special lifting sling above the welding tooling; (10) loosening a clamping wrench on the welding tooling; (11) backing the positioning pin of the upper chord; (12) inclining the positioning wall block at an angle of 45°; (13) placing the upper leveling segment and the lower leveling segment of the welded truss, and waiting for the next step; (14) calculating information about trapezium length and the like, and moving a trolley to a position shown by a scaleplate and locking same; (15) moving the scaleplate on the welding tooling based on the information in the step (14); (16) moving a right single piece to a position shown by the scaleplate using the moving trolley and locking same; (17) hoisting and positioning the upper chord and the lower chord of the right single piece; (19) tack-welding an upright rod; (20) tack-welding a diagonal brace rod; (21) full-welding same from three sides; (22) placing the truss at the straight segment in step (21), and waiting for the next step; (23) hoisting the upper leveling segment of the truss into a gantry welding device and positioning same; (24) hoisting the truss at the straight segment into the gantry welding device and positioning same; (25) hoisting the right single piece at the straight segment into the gantry welding device and positioning same; (26) hoisting a left single piece at the straight segment into the gantry welding device and positioning same; and performing alignment and spot welding close to the side plate interface, and positioning using a caliper gauge for central v-door dimensions; (27) hoisting the lower leveling segment of the truss into the gantry welding device and positioning same, and performing interface alignment and spot welding; (28) welding the bottom plate and the channel steel at the straight segment; (29) tack-welding an apron plate interface and a guide rail support plate interface; and (30) tack-welding brace rods at an inflection point, so that each brace rod is full-welded from three inner sides at the inflection point after tack welding. It is easy to guarantee the accuracy of relatively short upper and lower head trusses assembled by positioning and clamping the tooling, and since the truss at the sloping segment is in a rectangular or liner shape, compared with the traditional Z-shaped single piece, it is easier to guarantee the planeness of the single piece welded through the traditional process. Finally, upper and lower head assembles held in a clamping mode and the truss at the sloping segment are assembled in a butting mode, so that the truss accuracy is guaranteed by this tooling process.

In this embodiment, the tooling process comprises the following steps. In the first part, for integrated process tooling with upper and lower leveling segments, placing an upper chord and a lower chord on welding tooling, the upper chord and the lower chord passing through a positioning wall block to incline same at an angle of 45°; pushing out altitude-direction positioning pins for positioning the upper chord and the lower chord by a cylinder on the welding tooling; manually handling positioning welding elements by welding personnel from a side passage in the welding tooling, and clamping the upper chord and the lower chord using a speed wrench; spot-welding the upper chord and the lower chord by the welding personnel while standing in the side passage in the welding tooling until full welding performed on the upper chord is completed; backing the altitude-direction positioning pin of the lower chord; pushing a bottom plate into its place from bottom, and erecting positioning wallboards at both sides at the same time; tack-welding large and small angle steel at the head; welding the bottom plate and bottom plate channel steel; mounting a special lifting sling above the welding tooling; loosening a clamping wrench on the welding tooling; backing the positioning pin of the upper chord; inclining the positioning wall block at an angle of 45°; and placing the welded truss on a moving trolley by the special lifting sling for welding, and going to the next working procedure. In the second part, for single piece welding tooling, calculating information about trapezium length and the like first, and moving a trolley to a position shown by a scaleplate and locking same; moving the scaleplate on the welding tooling based on the information about length; moving a right single piece to a position shown by the scaleplate using the moving trolley and locking same; hoisting and positioning the upper chord and the lower chord of the right single piece; tack-welding an upright rod; tack-welding a diagonal brace rod and full-welding same from three sides; and placing the truss at the straight segment in step (21), and waiting for the next step. In the third part, for gantry assembling welding tooling, hoisting the lower leveling segment of the truss into the gantry welding device and positioning same; hoisting the truss at the straight segment into the gantry welding device and positioning same; hoisting the right single piece at the straight segment into the gantry welding device; performing front-back positioning by alignment and spot welding close to the upper side plate interface and performing lateral positioning close to the positioning surface of the tooling using a C-shaped clip; hoisting a left single piece at the straight segment into the gantry welding device; performing front-back positioning by alignment and spot welding close to the upper side plate interface and performing positioning using a caliper gauge for central v-door dimensions; performing alignment and spot welding on the lower leveling segment and the interface; welding the bottom plate and the channel steel at the straight segment; tack-welding an apron plate interface and a guide rail support plate interface; and tack-welding four brace rods at an inflection point, so that each brace rod is full-welded from three inner sides at the inflection point after tack welding. In this embodiment, when full welding is performed from three inner sides of upper and lower assemblies, the rated calculation basis of working hours for welding upper and lower leveling segments is as follows:
60#diagonal brace rod: (80+120)×2×2=800mm
100#diagonal brace rod: (160+120)×2×2=1120mm
100#upright rod: 220×2×2×2=1760mm
Main drive upright rod: 240×2×2=960mm
Main drive support plate: 240×2=480mm
Large angle steel: 200×2×2=800mm
Small angle steel: 310×2=620mm
Bottom plate: 2340×2=4680mm
Bottom plate channel steel: 120×2×4=960mm
Total welding length: 800+1120+1760+960+480+800+620+4680+960=12180mm
Net welding time: 12180/12=17min
Arc strike and transfer time: 15 min
Auxiliary positioning time: 13min
Time for equipment adjustment, lifting sling installation and the like: 10min
Total operation time for assemblies on upper and lower leveling segments at working station: about 55min

In this embodiment, the rated calculation basis of working stations and working hours for single piece welding is as follows:
Actual total welding length of 35°-4.5M ladder: 17 in total (each having 2 ends, 34 ends in total)
Total welding length (full welding from three sides): 2× 10(upright)×180+2×7(diagonal)×220=6680mm
Net welding time: 6680/12=9.3min
Arc strike and transfer time: 9.3 min
Auxiliary positioning time: 10min
Total operation time for tack-welding one single piece: about 30min
Actual total welding length of 30°-4.5M ladder: 19 in total (each having 2 ends, 38 ends in total)
Total welding length (full welding from three sides): 2×11(upright)×180+2×8(diagonal)×220=7480mm
Net welding time: 7480/12=10.4min
Arc strike and transfer time: 10.4 min
Auxiliary positioning time: 10min
Total time for tack-welding one single piece: about 30min
Tooling time is reasonably scheduled according to the calculation of working hours for welding, thereby improving the working efficiency.

The above-mentioned technical solution only reflects a preferred technical solution of technical solutions of the present invention. Some changes made to certain parts by those skilled in the art all reflect the principle of the present invention, and belong to the protective range of the present invention.

## Claims

1. A process for truss welding tooling, **characterized by** comprising the following steps:
(1) placing an upper chord and a lower chord on welding tooling, the upper chord and the lower chord passing through a positioning wall block to incline same at an angle of 45°;
(2) pushing out altitude-direction positioning pins for positioning the upper chord and the lower chord by a cylinder on the welding tooling;
(3) manually handling positioning welding elements by welding personnel from a side passage in the welding tooling, and clamping the upper chord and the lower chord using a speed wrench;
(4) spot-welding the upper chord and the lower chord by the welding personnel while standing in the side passage in the welding tooling until full welding performed on the upper chord is completed;
(5) backing the altitude-direction positioning pin of the lower chord;
(6) pushing a bottom plate into its place from bottom, and erecting positioning wallboards at both sides at the same time;
(7) tack-welding large and small angle steel at the head;
(8) welding the bottom plate and bottom plate channel steel;
(9) mounting a special lifting sling above the welding tooling;
(10) loosening a clamping wrench on the welding tooling;
(11) backing the positioning pin of the upper chord;
(12) inclining the positioning wall block at an angle of 45°;
(13) placing the upper leveling segment and the lower leveling segment of the welded truss, and waiting for the next step;
(14) calculating information about trapezium length and the like, and moving a trolley to a position shown by a scaleplate and locking same;
(15) moving the scaleplate on the welding tooling based on the information in the step (14);
(16) moving a right single piece to a position shown by the scaleplate using the moving trolley and locking same;
(17) hoisting and positioning the upper chord and the lower chord of the right single piece;
(19) tack-welding an upright rod;
(20) tack-welding a diagonal brace rod;
(21) full-welding same from three sides;
(22) placing the truss at the straight segment in step (21), and waiting for the next step;
(23) hoisting the upper leveling segment of the truss into a gantry welding device and positioning same;
(24) hoisting the truss at the straight segment into the gantry welding device and positioning same;
(25) hoisting the right single piece at the straight segment into the gantry welding device and positioning same;
(26) hoisting a left single piece at the straight segment into the gantry welding device and positioning same; and performing alignment and spot welding close to the side plate interface, and positioning using a caliper gauge for central v-door dimensions;
(27) hoisting the lower leveling segment of the truss into the gantry welding device and positioning same, and performing interface alignment and spot welding;
(28) welding the bottom plate and the channel steel at the straight segment;
(29) tack-welding an apron plate interface and a guide rail support plate interface; and
(30) tack-welding brace rods at an inflection point, so that each brace rod is full-welded from three inner sides at the inflection point after tack welding.

2. The process for truss welding tooling of claim 1, **characterized in that** in steps (2)-(13), the steps (2)-(13) can be repeatedly performed.

3. The process for truss welding tooling of claim 1, **characterized in that** in steps (17)-(21), the steps (17)-(21) can be repeatedly performed.

4. The process for truss welding tooling of claim 1, **characterized in that** in steps (17)-(21), the steps (17)-(21) can be used for welding left single pieces.

5. The process for truss welding tooling of claim 1, **characterized in that** in step (19), positioning is performed using a positioning pin in the step (19).

6. The process for truss welding tooling of claim 1, **characterized in that** in step (22), a transverse seam at one side is preserved and is not welded in the step (22).

7. The process for truss welding tooling of claim 1, **characterized in that** in step (25), the positioning mode in the step (25) is to perform front-back positioning by alignment and spot welding close to the upper side plate interface and perform lateral positioning close to the positioning surface of the tooling using a C-shaped clip.

8. The process for truss welding tooling of claim 1, **characterized in that** in step (26), the positioning mode in the step (26) is to perform front-back positioning by alignment and spot welding close to the upper side plate interface and perform positioning using a caliper gauge for central v-door dimensions.

9. The process for truss welding tooling of claim 1, **characterized in that** in step (27), an upper lifting sling and a lower lifting sling can be removed simultaneously while performing the step (27).

10. The process for truss welding tooling of claim 1, **characterized in that** in step (30), there are four brace rods in total in the step (30), including an upper brace rod, a lower brace rod, a left brace rod and a right brace rod.
